# EUROPEAN PATENT APPLICATION

(11) **EP 0 905 145 A1**
(43) Date of publication of application: **31.03.1999**
(21) Application number: 97202973.0
(22) Date of filing: 27.09.1997
(51) Int. Cl.: C08F 2/00, C08F 210/16, C08F 4/22, C08F 297/08

(54) **Production of polyethylene having improved crack resistance**

(71) Applicant: FINA RESEARCH S.A., B-7181 Seneffe (Feluy) (BE)
(72) Inventor: Debras, Guy, 6210 Frasnes-les Gosselies (BE); Vandaele, Hugo, 8200 Bruges (BE)

(57) **Abstract**

A process for producing polyethylene having improved crack resistance, the process comprising copolymerising ethylene and an alpha-olefinic comonomer comprising from 3 to 8 carbon atoms, in the presence of a chromium-based catalyst in a first reactor, feeding the polyethylene copolymer thereby produced and the chromium-based catalyst to a second reactor, and in the second reactor copolymerising ethylene and an alpha-olefinic comonomer comprising from 3 to 8 carbon atoms, in the presence of the chromium-based catalyst thereby to produce a second polyethylene product, the first and second polyethylene products forming a combined polyethylene having a monomodal molecular weight distribution.

## Description

The present invention relates to a process for producing polyethylene having improved crack resistance.

Polyethylene is known for use in the manufacture of a wide variety of articles. The polyethylene polymerisation process can be varied in a number of respects to product a wide variety of resultant polyethylene resins having different physical properties which render the various resins suitable for use in different applications. In particular, it is known to use polyethylene for use in applications where the polyethylene is required to have crack resistance, both resistance to rapid and to slow crack growth. For example, polyethylene is known for use in the manufacture of pipes where it is required that the material of the pipe has sufficient crack resistance so as to avoid inadvertent fracture in service.

Chromium-based catalysts used for the production of polyethylene have been known for some time. Typically, for the manufacture of polyethylene use as a pipe resin, the polyethylene is polymerised in a reactor using a chromium-based catalyst to product a monomodal molecular weight distribution of the resultant polyethylene resin.

It is known in the art that the physical properties, in particular the mechanical properties, of a polyethylene product can vary depending on what catalytic system was employed to make the polyethylene. This is because different catalyst systems tend to yield different molecular weight distributions in the polyethylene produced.

The present invention aims in one aspect to provide a process for producing polyethylene, in particular a polyethylene having a monomodal molecular weight distribution, having improved crack resistance.

Accordingly, the present invention provides a process for producing polyethylene having improved crack resistance, the process comprising copolymerising ethylene and an alpha-olefinic comonomer comprising from 3 to 8 carbon atoms, in the presence of a chromium-based catalyst in a first reactor, feeding the polyethylene copolymer thereby produced and the chromium-based catalyst to a second reactor, and in the second reactor copolymerising ethylene and an alpha-olefinic comonomer comprising from 3 to 8 carbon atoms, in the presence of the chromium-based catalyst thereby to produce a second polyethylene product, the first and second polyethylene products forming a combined polyethylene having a monomodal molecular weight distribution.

Preferably, a greater amount of comonomer is incorporated into the second polyethylene product than in the first polyethylene product.

Preferably, the combined polyethylene comprises from 50 to 70% by weight of the first polyethylene product and from 30 to 50% by weight of the second polyethylene product.

To achieve such a monomodal molecular weight distribution, the first and second polyethylene products individually have substantially the same molecular weight distribution and melt index.

The present inventor has discovered surprisingly that by producing a polyethylene pipe resin having a monomodal distribution using two reactors in series, as opposed to using a single reactor, the resultant pipe resin exhibits better resistance to slow crack growth and to rapid crack propagation.

Embodiments of the present invention will now be described by way of example only with reference to the accompany drawings, in which:-
Figure 1 is a gel permeation chromatograph of a monomodal polyethylene resin produced in accordance with the invention; and
Figure 2 is a gel permeation chromatograph of a monomodal polyethylene resin produced by a process not in accordance with the invention.

In accordance with the invention, a monomodal polyethylene resin is produced in two serially connected reactors, each reactor incorporating a common chromium-based catalyst. Preferably the chromium-based catalyst comprises a supported chromium oxide catalyst having a titania-containing support, for example a composite silica and titania support. A particularly preferred chromium-based catalyst may comprise from 0.5 to 5 wt% chromium, preferably around 1 wt% chromium, such as 0.9 wt% chromium based on the weight of the chromium-containing catalyst. The support comprises at least 2 wt% titanium, preferably around 2 to 3 wt% titanium, more preferably around 2.3 wt% titanium based on the weight of the chromium containing catalyst. The chromium-based catalyst may have a specific surface area of from 200 to 700 m²/g, preferably from 400 to 550 m²/g and a volume porosity of greater than 2 cc/g preferably from 2 to 3 cc/g.

A particularly preferred chromium-based catalyst for use in the present invention comprises the catalyst sold in commerce under the trade mark MAGNAPORE TERGEL T963 by W.R. Grace GmbH. This catalyst has an average pore radius of 190A, a pore volume of around 2.1 cc/g, a specific surface area of around 510 m²/g and a chromium content of around 0.9 wt% based on the weight of the chromium-containing catalyst. The support comprises a composite silica and titania support. The amount of titania in the support provides that the catalyst as a whole comprises around 2.3 wt% titanium.

The catalyst may be subjected to an initial activation step in air at an elevated activation temperature. The activation temperature preferably ranges from 500 to 850°C, more preferably 600 to 750°C.

In the first reactor, preferably ethylene monomer and an alpha-olefinic comonomer comprising from 3 to 8 carbon atoms are fed thereinto in the liquid phase, typically in an inert diluent, preferably isobutane, together with a chromium-based catalyst. Typically, the copolymerisation is performed at a temperature of from 90 to 105°C, more typically around 100°C, and at a pressure of from 20 to 60 bars, more typically around 42 bars. The comonomer preferably comprises 1-hexene, but may alternatively comprise 1-butene, 1-pentene, 4-methyl 1-pentene, 1-heptene or 1-octene.

Typically, the ethylene monomer comprises from 3 to 8% by weight and the comonomer comprises from 0.2 to 4% by weight, each based on the total weight of the monomer and comonomer in the inert diluent. A typical starting composition comprises an ethylene flow of around 6.2wt%, a 1-hexene flow of around 0.7wt% in isobutane as inert diluent with the hexene/ethylene weight ratio being around 0.117.

In the first reactor, polyethylene is produced by copolymerisation of the ethylene and the 1-hexene. In accordance with the preferred process, in the first reactor the process variables such as the ethylene flow rate and the temperature are controlled so as to produce a polyethylene resin having a specified high load melt index (HLMI) yielding the required mechanical properties of the resin. Typically, the HLMI ranges from 5 to 30g/10min, and is most typically from 8 to 23g/10min. The high load melt index is determined using the procedures of ASTM D1238 using a load of 21.6kg at a temperature of 190°C. The HLMI is broadly inversely indicative of the molecular weight of the polymer. In other words, a low melt index is indicative of a high molecular weight for the polyethylene, and vice versa. In the first reactor, the density of the resultant polyethylene is controlled by varying the amount of comonomer fed to the first reactor.

The polyethylene product, together with unreacted ethylene and hexene in the inert diluent, is fed to the second reactor serially connected thereto and also additional monomer (ethylene) and comonomer are fed into the second reactor. The same chromium-based catalyst is present in the second reactor as in the first reactor. In the second reactor, the process parameters are varied to produce therein a second polyethylene product whereby the second polyethylene product, and thus the final combined polyethylene product, have substantially the same HLMI, and optionally substantially the same density, as the first polyethylene product produced in the first reactor so that the combined polyethylene product has a monomodal molecular weight distribution.

Preferably, the HLMI of the second polyethylene product is with ±15% of the HLMI of the first polyethylene product.

Optionally, the first and second polyethylene products have substantially the same density.

More preferably, the second polyethylene product has a density within 0.001g/cc of the density of the first polyethylene product.

As is known in the art, a monomodal molecular weight distribution has a single peak in the gel permeation chromatography curve of the resin. As is also known in the art, when two resins are combined to form a composite resin having a monomodal molecular weight distribution, the HLMI values of the two resins tend to be the same or reasonably similar, depending on the actual HLMI values themselves. Thus for example preferred resins made in accordance with the invention may have HLMI values of each resin ranging from 5 to 30g/10min, with the final resin product having an HLMI ranging from 8 to 23g/10min. For other resins made in accordance with the invention, the HLMI values of the two resins may be higher than or lower than this range but the difference between the HLMI values is controlled so that, for any combination of resins produced in accordance with the invention, the resultant molecular weight distribution is nevertheless monomodal. The density of the two resin products produced in the first and second reactors may differ substantially, yet still providing a monomodal molecular weight distribution in the final combined resin. Such a density difference may yield improved slow crack growth resistance of the combined resin. A typical density difference is around 0.02 g/cc. If there is a density difference, the higher and lower molecular weight products tend to have lower and higher density respectively.

Preferably, the density of the combined polyethylene is from 0.936 to 0.948g/cc.

To achieve this, the weight percentages of ethylene and comonomer in the second reactor are selected. These weight percentages are achieved by controlling the amount of ethylene and comonomer additionally introduced into the second reactor over and above the residual amounts thereof passing into the second reactor from the first reactor together with the first polyethylene product.

Without being bound by theory, it is believed that the chromium-based catalyst is progressively chemically reduced by the ethylene in the first reactor to yield Cr²⁺ ions in the catalyst. The chemically reduced catalyst changes how the comonomer is incorporated into the polymer chains in the first reactor. In the second serially connected reactor, the chromium-based catalyst has already been chemically reduced yielding a different degree of introduction of the comonomer into the polymer chains in the second reactor as compared to the first reactor. This leads to a change in the mechanical properties of the polyethylene resin produced in the second reactor as compared to that produced in the first reactor which in turn can yield an increase in the slow crack resistance and in the rapid crack propagation resistance of the polyethylene resin when used for the manufacture of pipes. This technical improvement is achievable even though the first and second polyethylene resins may have substantially the same HLMI, this in turn representing similar molecular weight distributions for the two resins. Surprisingly, it has been discovered that in targeting the density of the polyethylene produced in the second reactor so as to be substantially the same as that of the polyethylene produced in the first reactor, this can be achieved by increased comonomer consumption in the second reactor which in turn surprisingly yields improved mechanical properties of the combined resin as compared to resins having a similar density and HLMI values produced in a single reactor.

In the second reactor, since the chromium-based catalyst has been previously chemically reduced, significantly more comonomer is introduced into the second polyethylene resin product as compared to the amount introduced into the first polyethylene resin product. Accordingly, the second reactor is operated by selecting a desired proportion of the combined polyethylene resin product to be constituted by the second polyethylene resin product produced in the second reactor. Typically, the second polyethylene product produced in the second reactor comprises up to 50%, more typically around one third by weight, of the composite polyethylene resin product.

The amount of additional 1-hexene fed to the second reactor may be controlled to control the density of the second polyethylene resin product. The HLMI of the second polyethylene resin product may be controlled by varying the ethylene concentration in the second reactor and the temperature in the second reactor. The proportion of the amount of polyethylene produced in the second reactor may be increased by increasing the residence time of the reactants in the second reactor.

The present invention will now be described with reference to the following non-limiting Example.

### EXAMPLE 1

Polyethylene was produced in first and second serially connected reactors in accordance with the process parameters specified in Table 1. The polymer properties of the product of the first reactor and of the final composite product exiting from the second reactor are shown in Table 1. In the first reactor, ethylene and 1-hexene were fed to the first reactor in recycled isobutane as an inert diluent and the ethylene and 1-hexene were copolymerised in the presence of a chromium-based catalyst sold in commerce under the trade mark MAGNAPORE TERGEL T963 by the company W.R. Grace GmbH.

The first polyethylene resin reaction product produced in the first reactor had an HLMI of 11.1g/10min and a density of 0.9451g/cc. The first polyethylene resin reaction product was fed together with the 1-hexene and ethylene and the catalyst into the second reactor and additional 1-hexene was introduced into the second reactor. It may be seen from Table 1 that in the second reactor the hexene/ethylene ratio was higher than in the first reactor. The process conditions in the second reactor were controlled to yield a second polyethylene resin reaction product in the second reactor having a density substantially the same as that of the first polyethylene resin reaction product whereby as specified in Table 1, the final composite product had a density substantially the same as the product from the first reactor. It may be seen that the final polyethylene resin reaction product had a lower HLMI of 9.9g/10min as compared to the first polyethylene resin reaction product, this indicating a higher molecular weight, and thus a higher degree of incorporation of comonomer into the second polyethylene resin reaction product than for the first polyethylene resin reaction product. However, the HLMI values of the first and second pressure of 4.0 MPa, the pipe failed with a brittle failure after 4706 hours in one test and in another test did not even fail even after 7850 hours.

In the notch test, the pipe was subjected to a temperature of 80°C and a pressure of 4.0 MPa and survived the test for a period of 1010 hours.

As shown in Table 2, the polyethylene resin was also formed into a pipe having a diameter of 110mm and a ratio between the diameter and the thickness of 11. The pipe was subjected to a rapid crack propagation (RCP) test in accordance with the RCP S4 test of ISO/DIS 13477 or EN33477. It may be seen from Table 1 that for the test at 0°C the pipe had not failed at an internal critical pressure (Pc) of 12 bars and that when the test was repeated at a temperature of -10°C, the pipe failed by rapid crack propagation at a critical pressure Pc of 2.0 bars.

### COMPARATIVE EXAMPLE 1

The pressure, notch and RCP tests performed on the polyethylene resin of Example 1 were repeated on a pipe formed from a polyethylene resin produced in a single reactor system, in which a monomodal polyethylene resin was produced using the same chromium-based catalyst as in Example 1 using the process conditions specified in Table 1. The polyethylene resin had a monomodal molecular weight distribution as shown in Figure 2, which is a similar distribution to that of the resin of Example 1.

It will be seen that for the pressure tests, the pipe failed after significantly lower testing periods than for the pipe made from the polyethylene resin produced in accordance with the present invention. Moreover, for the notch test the pipe failed again after a significantly lower test period than for Example 1. This indicates an improved resistance to slow crack growth using the pipe resin polymerised using two reactors in series.

For the rapid crack propagation test, the test was carried out in Comparative Example 1 only at 0°C and the pipe failed at a lower critical pressure Pc than Example 1 of 2.5 bars. This demonstrates that the pipe resin of the present invention can produce improved resistance of rapid crack propagation.

**TABLE 1**

| PRODUCTION | | EXAMPLE 1 | | COMPARATIVE EXAMPLE 1 |
|---|---|---|---|---|
| | | First Reactor | Second Reactor | Single Reactor |
| - | | | | |
| Offgas: | - ethylene (wt%) | 6.17 | 5.78 | 5.36 |
| | - hexene (wt%) | 0.72 | 0.54 | 0.686 |
| | - C₆/C₂ ratio | 0.117 | 0.093 | 0.128 |
| Temperature (0°C) | | 99.4 | 100 | 99.7 |
| PE production | | 66wt% | 34wt% | 100wt% |
| HLMI(g/10min) | | 11.1 | 9.9 | 10.4 |
| Density (g/cc) | | 0.9451 | 0.9450 | 0.9450 |
| C6-consumed (kg/metric tonne of PE) (from mass balance) | | 12 | 22.5 | 15.3 |

**TABLE 2**

| MECHANICAL PROPERTIES | EXAMPLE 1 | COMPARATIVE EXAMPLE 1 |
|---|---|---|
| **A. SLOW CRACK GROWTH** | **TIME FOR FAILURE (hr)** | |
| | | |

| 1**. PRESSURE TEST (Diam 63mm/SDR11)** | | |
|---|---|---|
| 80°C/5.0MPa (hr) | 3922 | 1020 |
| 80°C/4.0MPa (hr) | 4706 & >7850 | 2500 |

| **2. NOTCH TEST (Diam 063mm/SDR11)** | | |
|---|---|---|
| 80°C/4.0MPa (hr) | 1010 | 350 |

| **B. RAPID CRACK PROPAGATION** | | |
|---|---|---|
| | | |

| **RCP (Diam 110mm/SDR11)** | | |
|---|---|---|
| PcS4/0°C (bar) | >12 | 2.5 |
| PcS4/-10°C (bar) | 2.0 | - |

## Claims

1. A process for producing polyethylene having improved crack resistance, the process comprising copolymerising ethylene and an alpha-olefinic comonomer comprising from 3 to 8 carbon atoms, in the presence of a chromium-based catalyst in a first reactor, feeding the polyethylene copolymer thereby produced and the chromium-based catalyst to a second reactor, and in the second reactor copolymerising ethylene and an alpha-olefinic comonomer comprising from 3 to 8 carbon atoms, in the presence of the chromium-based catalyst thereby to produce a second polyethylene product, the first and second polyethylene products forming a combined polyethylene having a monomodal molecular weight distribution.

2. A process according to claim 1 wherein a greater amount of comonomer is incorporated into the second polyethylene product than in the first polyethylene product.

3. A process according to any foregoing claim wherein the comonomer is 1-hexene.

4. A process according to any foregoing claim wherein the combined polyethylene comprises from 50 to 70% by weight of the first polyethylene product and from 30 to 50% by weight of the second polyethylene product.

5. A process according to any foregoing claim wherein the HLMI of the second polyethylene product is with ±15% of the HLMI of the first polyethylene product.

6. A process according to claim 5 wherein the HLMI of the first and second polyethylene products is from 8 to 23g/10min.

7. A process according to any foregoing claim wherein the first and second polyethylene products have substantially the same density.

8. A process according to claim 7 wherein the second polyethylene product has a density within 0.001g/cc of the density of the first polyethylene product.

9. A process according to any one of claims 1 to 6 wherein the first and second polyethylene products differ in density by around 0.02g/cc.

10. A process according to claim 8 wherein the density of the combined polyethylene is from 0.936 to 0.948g/cc.
